# EUROPEAN PATENT SPECIFICATION

(11) **EP 1 721 723 B1**
(45) Date of publication and mention of the grant of the patent: **28.11.2018**
(21) Application number: 05719525.7
(22) Date of filing: 25.02.2005
(51) Int. Cl.: B29C 47/06, B29C 47/02, B29C 47/00, B29C 47/56, B29C 47/14

(54) **PROCESS FOR PRODUCING MULTILAYERED UNSTRETCHED FILM, PROCESS FOR PRODUCING MULTILAYERED-RESIN-COATED METAL SHEET, AND APPARATUS FOR PRODUCING MULTILAYERED UNSTRETCHED FILM**
VERFAHREN ZUR HERSTELLUNG VON MEHRLAGIGER UNGESTRECKTER FOLIE, VERFAHREN ZUR HERSTELLUNG VON MEHRLAGIGER, HARZBESCHICHTETER METALLFOLIE UND VORRICHTUNG ZUR HERSTELLUNG EINER MEHRLAGIGEN UNGESTRECKTEN FOLIE
PROCEDE DE PRODUCTION DE PELLICULE NON TENDUE MULTI- COUCHES, PROCEDE DE PRODUCTION D'UNE FEUILLE DE METAL ENDUITE DE RESINE MULTICOUCHES ET DISPOSITIF DE PRODUCTION DE PELLICULE NON TENDUE MULTICOUCHES

(30) Priority: 01.03.2004 JP 2004055685
(43) Date of publication of application: 15.11.2006
(73) Proprietor: Toyo Kohan Co., Ltd., Tokyo 102-8447 (JP)
(72) Inventor: FUJII, Tadashi, TOYO KOHAN CO., LTD., Kudamatsu-shi, Yamaguchi 7448611 (JP); NAKAMURA, Takuji, TOYO KOHAN CO., LTD., Kudamatsu-shi, Yamaguchi 7448611 (JP); INAZAWA, Hiroshi, TOYO KOHAN CO., LTD., Kudamatsu-shi, Yamaguchi 7448611 (JP); MATSUBARA, Yasuhiro, TOYO KOHAN CO., LTD., Kudamatsu-shi, Yamaguchi 744-8611 (JP)
(74) Representative: Vossius & Partner Patentanwälte Rechtsanwälte mbB
(86) International application number: PCT/JP2005/003124
(87) International publication number: WO 2005/082597

(56) References cited:
- JP-A- 8 207 119
- JP-A- 8 336 884
- JP-A- 10 139 909
- JP-A- 2003 291 258
- US-A- 5 120 484

## Description

### TECHNICAL FIELD

The present invention relates to a process for producing a multilayered unstretched film of thermoplastic resins, a process for producing a multilayered-resin-coated metal sheet coated and laminated with multiple layers of thermoplastic resin, and an apparatus for producing a multilayered unstretched film of a thermoplastic resin.

### BACKGROUND ART

For producing a multilayered film of plural thermoplastic resins, much used is a feed-block method comprising combining plural heated and melted resins before they flow into a T-die, then widening them through one manifold and thereafter ejecting them out through a die lip of a T-die; or a multi-manifold method comprising providing plural manifolds inside a T-die, leading plural heated and melted resins separately to the respective manifolds and widening them therein, and thereafter combining them and ejecting them out through a die lip of the T-die. The multilayered thermoplastic resin film produced according to any of these methods, which is ejected out through a T-die and extruded out onto a casting roll, is trimmed by cutting off both its edges so as to have a constant thickness in the cross direction thereof, since both its edges are solidified thicker on the casting roll than the center part of the film owing to the characteristics of the highly-viscous resin melts. The multilayered resins of the cut and removed thick parts could not be recycled as materials for films by heating and melting them in extruders, and are therefore discarded; and this is a bar to the cost reduction in producing multilayered films.

For reducing the economical loss of non-recyclable trimmed film wastes, a method is proposed in Patent Reference 1. The method relates to a film having an indispensable requirement of high quality, such as an electrically-insulating film of a biaxially-stretched polypropylene film for production of capacitors; and this comprises heating and melting a propylene polymer B in a first extruder, heating and melting a propylene polymer A in a second extruder, and co-extruding them through a flat sheet die, wherein the propylene polymer A is extruded by feeing it to both sides of the propylene polymer B, the resulting resin film is biaxially stretched, and then the propylene polymer A on both sides of the propylene polymer B are trimmed off. In the method, the propylene polymer B satisfying the indispensable requirement of high quality is used as possible effectively so as not to give trimmed film wastes. In the method, however, the propylene polymer B to be used must be so designed that it is compatible with the propylene polymer A in point of the molecular weight, the residual ash, the melt flow index and the melting point thereof, and therefore, the use of the method is limited and the method is not applicable to production of films of general-purpose thermoplastic resins.

Patent Reference 2 discloses an extrusion apparatus and process for converging rheologically dissimilar streams.

Information of a prior-art reference relating to the present application includes the following:
Patent Reference 1: JP 08-336884 A
Patent Reference 2: US 5 120 484 A

### DISCLOSURE OF THE INVENTION

### PROBLEMS THAT THE INVENTION IS TO SOLVE

The present invention is to provide a process for producing a multilayered unstretched film, a process for producing a multilayered-resin-coated metal sheet, and an apparatus for producing a multilayered unstretched film, in which the thick film parts to be discarded after the film formation is minimized for cost reduction in film production.

### MEANS FOR SOLVING THE PROBLEMS

These problems are solved by an apparatus and processes according to the claims.

### BRIEF DESCRIPTION OF THE DRAWINGS

[Fig. 1] Fig. 1 is an schematic side view of an apparatus for producing a multilayered unstretched film of the invention.
[Fig. 2] Fig. 2 is an schematic front view of the apparatus for producing a multilayered unstretched film of the invention.
[Fig. 3] Fig. 3 is a graphical view showing a condition of thermoplastic resins just before extruded to a T-die, and a condition of a formed film.
[Fig. 4] Fig. 4 is a graphical view showing a condition of thermoplastic resins just before extruded to a T-die, and a condition of a formed film.
[Fig. 5] Fig. 5 is a graphical view showing a condition of thermoplastic resins just before extruded to a T-die, and a condition of a formed film.
[Fig. 6] Fig. 6 is a schematic cross-sectional view showing a meeting place of resins in a feed block.
[Fig. 7] Fig. 7 is a graphical view showing a condition of thermoplastic resins just before extruded to a T-die, and a condition of a formed film.
[Fig. 8] Fig. 8 is a schematic plan view showing a process for producing a resin-coated metal sheet of the invention.

In the drawings, 1 is a feed block; 2 is a T-die; 4 is a die lip; 5 is a casting (chill) roll; 6 is a lapping part; 7 is a meeting place; 10 is an apparatus for producing an unstretched film; 15 is a cutting tool; 20 is an unstretched film; 20A is an intended thermoplastic resin; 20 B is another thermoplastic resin; 30 is a metal sheet; 40 is a resin-coated metal sheet; A1, A2, A3 and B are extruders; C1, C2 and C3 are ducts for resin melt supply; C1R, C2R and C3R are connection parts of the lowermost part of the duct for resin melt supply, to a T-die; D1, D2 and D3 are ducts for resin melt supply; H1, H2 and H3 are holes; H1R, H2R and H3R are the parts just before the hole of the duct for resin melt supply; M1 and M2 and M3 are manifolds.

### BEST MODE FOR CARRYING OUT THE INVENTION

The invention is described in detail hereinunder. In the process for producing a multilayered unstretched film of the invention, the resins to form the intended multilayered unstretched film include a polyolefin resin of one or more polymers or copolymers of 1-alkene having from 2 to 8 carbon atoms, such as low-density polyethylene, middle-density polyethylene, high-density polyethylene, polypropylene, polybutene-1, polypentene-1, polyhexene-1, polyheptene-1, polyoctene-1, ethylene-propylene copolymer, ethylene-butene-1 copolymer, ethylene-hexane copolymer; a polyamide resin such as 6-nylon, 6,6-nylon, 6,10-nylon; and a polyester resin comprising, as the acid component thereof, one or more acids of a dibasic aromatic dicarboxylic acid such as terephthalic acid, isophthalic acid, orthophthalic acid, p-β-oxyethoxybenzoic acid, naphthalene-2, 6-dicarboxylic acid, diphenoxyethane-4,4-dicarboxylic acid, 5-sodium-sulfoisophthalic acid; an alicyclic dicarboxylic acid such as hexahydroterephthalic acid, cyclohexanedicarboxylic acid; an aliphatic dicarboxylic acid such as adipic acid, sebacic acid, dimer acid; a polybasic acid such as trimellitic acid, pyromellitic acid, hemimellitic acid, 1,1,2,2-ethane-tetracarboxylic acid, 1,1,2-ethane-tricarboxylic acid, 1,3,5-pentane-tricarboxylic acid, 1,2,3,4-cyclopentane-tetracarboxylic acid, biphenyl-3, 4,3' ,4'-cyclopentane-tetracarboxylic acid; and, as the alcohol component thereof, one or more diols such as ethylene glycol, propylene glycol, 1,4-butanediol, neopentyl glycol, 1,6-hexylene glycol, diethylene glycol, triethylene glycol, cyclohexanedimethanol, and other polyalcohols such as pentaerythritol, glycerol, trimethylolpropane, 1,2,6-hexanetriol, sorbitol, 1,1,4,4-tetrakis(hydroxymethyl)cyclohexane. In the invention, the plural thermoplastic resins for the intended multilayered thermoplastic resin and the other thermoplastic resin that differs from the intended thermoplastic resins are formed into films by controlling their melt viscosity in the manner to be mentioned hereinunder. Accordingly, they are not specifically defined in point of the resin composition thereof, and any of the above-mentioned resins may be used for the intended thermoplastic resins and for the other thermoplastic resin that differs from the intended thermoplastic resins and is to coexist on both sides of the intended thermoplastic resins, as combined.

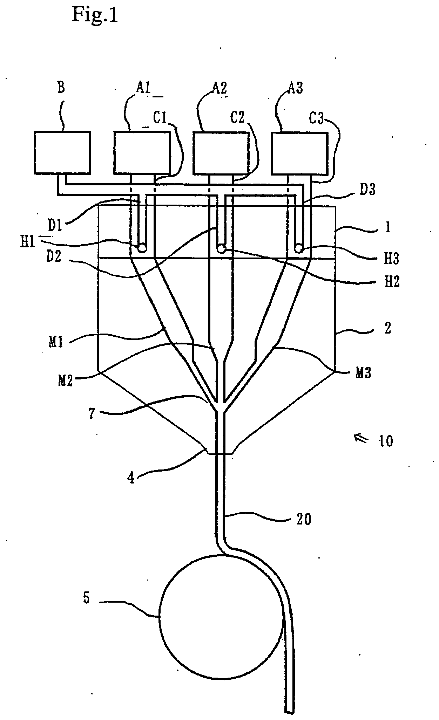

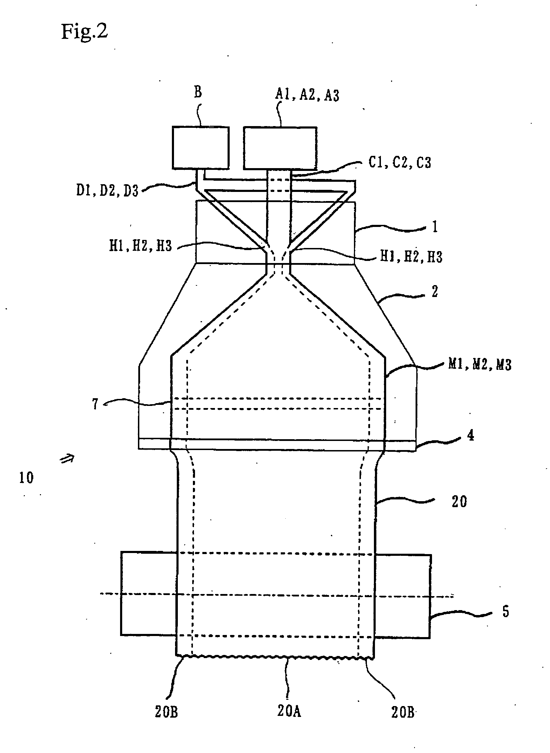

Next described is a process for producing a film where a different thermoplastic resin coexists on both sides of the intended multilayered thermoplastic resins, using the process and the apparatus for producing a multilayered unstretched film of the invention. Fig. 1 is a schematic side view of an apparatus 10 for producing a multilayered unstretched film of the invention; and Fig. 2 is a schematic front view thereof. For simplifying the description herein, a case of producing a three-layered unstretched film is described. Three thermoplastic resins to be formed into a three-layered unstretched film 20 are heated and melted separately in three extruders A1, A2 and A3, and fed to a feed block 1 via ducts C1, C2 and C3 for resin melt supply for the intended thermoplastic resins A1, A2 and A3, respectively, that are connected to the respective extruders A1, A2 and A3. The other thermoplastic resin 20B that is to coexist on both sides of the three thermoplastic resins 20A is heated and melted in an extruder B, and fed to the feed block 1 via ducts D1, D2 and D3 for resin melt supply for another thermoplastic resin 20B, which are connected to the extruder B and which are branched on their way. The ducts C1, C2 and C3 for resin melt supply for the intended three thermoplastic resins 20A run through the feed block 1, and at the lowermost part thereof, they are connected to a T-die 2. In the feed flock 1, holes H1, H2 and H3 are formed on both sides of the lower part of the ducts C1, C2 and C3 for resin melt supply for the intended three thermoplastic resins 20A; and in these holes H1, H2 and H3, ducts D1, D2 and D3 for resin melt supply for the other thermoplastic resin 20B are formed to run through the feed block 1.

The intended plural thermoplastic resins 20A heated and melted in the extruders A1, A2 and A3 are fed to the feed block 1 via the ducts C1, C2 and C3 for resinmelt supply, and is extruded toward the T-die 2 connected to the lowermost part of the feed block. The other thermoplastic resin 20B heated and melted in the extruder B is fed to the feed block 1 via the ducts D1, D2 and D3 for resin melt supply, and extruded out into the ducts C1, C2 and C3 for resin melt supply for the intended plural thermoplastic resins, through the holes H1, H2 and H3 formed on both sides of the lower part of the ducts C1, C2 and C3 for resin melt supply, and the thermoplastic resin B is thus made to coexist on both sides of the intended three thermoplastic resins 20A. Next, the resin melts that comprise the thermoplastic resin B coexisting on both sides of the intended three thermoplastic resins 20A are widened in the manifolds M1, M2 andM3 provided inside the T-die 2, then combined at the meeting place 7 provided just above the die lip 4 of the T-die 2, and laminated in three layers, and thereafter ejected through the die lip 4 onto the casting roll 5 disposed below the T-die 2. In this stage, both edges in the cross direction of the thus-ejected, still molten unstretched resin film 20 are inevitably thicker than any other part. Accordingly, the multilayered unstretched film 20 is formed in which the thermoplastic resin 20B thicker than the intended thermoplastic resin 20A coexists on both sides of the thermoplastic resin 20A.

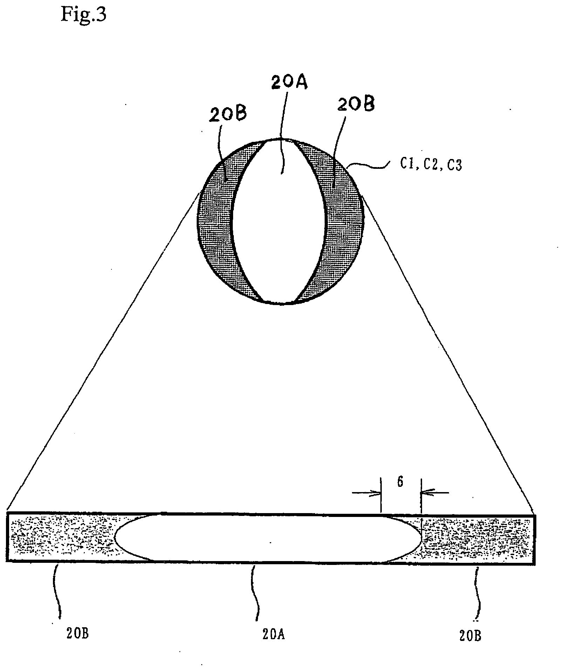

For facilitating the working step in film formation in the film-forming apparatus, when the ducts C1, C2 and C3 and the ducts D1, D2 and D3 for resin melt supply all have a circular cross section, then the other thermoplastic resin 20B coexists on both sides of the intended three thermoplastic resins 20A, having a cross-sectional profile as in Fig. 3 to Fig. 5 in accordance with the viscosity difference between the intended three thermoplastic resins 20A and the other thermoplastic resin 20B, at the lowermost part of the ducts C1, C2 and C3 for resin melt supply just before the T-die 2. Fig. 3 to Fig. 5 are graphical views each showing the condition of a resin melt of any of the intended three thermoplastic resins 20A and a resin melt of the other thermoplastic resin 20B just before extrusion into any of the manifolds M1, M2 and M3, through any of the ducts C1, C2 and C3 for resin melt supply of any of the intended three thermoplastic resins 20A in the feed block 1 and through any of the holes H1, H2 and H3 formed on both sides of the lower part of the resinmelt supply ducts C1, C2 andC3, and the condition of the resins widened through any of the manifolds M1, M2 and M3. In these, the upper view is a cross-sectional view showing the condition of any of the intended three thermoplastic resins 20A and another thermoplastic resin 20B in the lower part of the ducts C1, C2 or C3 for resin melt supply; and the lower view shows the cross section of the thermoplastic resin 20A and the other thermoplastic resin 20B coexisting together after widened through any of the manifolds M1, M2 and M3.

In case where the melt viscosity of any of the intended three thermoplastic resins 20A is extremely larger than the melt viscosity of the other thermoplastic resin 20B, then the thermoplastic resin 20B is to coexist on both sides of any of the intended thermoplastic resins 20A, having the cross-sectional profile as in the upper view of Fig. 3; and in this condition, when the resin melts are widened through the manifold, then they form a lapping part 6 where the thermoplastic resin 20B has stepped in the upper and lower edges of any of the intended thermoplastic resins 20A, as in the lower view of Fig. 3.

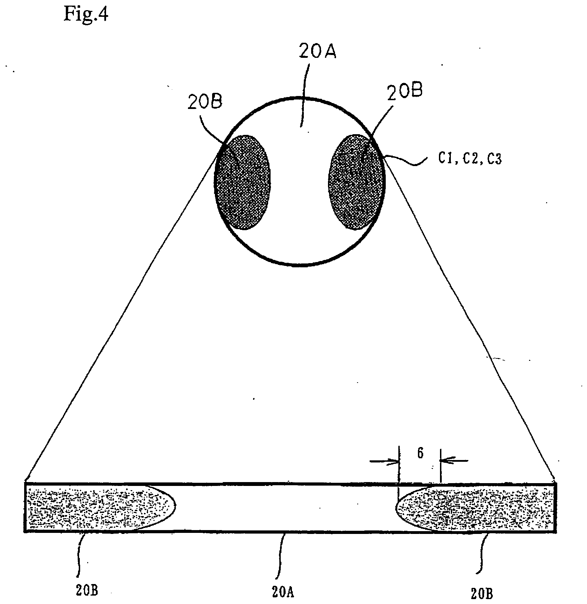

In case where the melt viscosity of any of the intended thermoplastic resins 20A is extremely smaller than the melt viscosity of the other thermoplastic resin 20B, then the thermoplastic resin 20B is to coexist on both sides of any of the intended thermoplastic resins 20A, having the cross-sectional profile as in the upper view of Fig. 4; and in this condition, when the resin melts are widened through the manifold, then they form a lapping part 6 where the thermoplastic resin B has stepped in the upper and lower edges of any of the intended thermoplastic resins 20A, as in the lower view of Fig. 4.

These lapping parts 6 where any of the intended thermoplastic resins 20A and the other thermoplastic resin 20B overlap with each other must be removed as they are unacceptable in products. In case where the lapping part 6 is great, then the area to be removed is large and the yield of the intended thermoplastic resins is low. For facilitating the detection of the lapping part 6, it is desirable that a color pigment is added to the other thermoplastic resin 20B to color it. In case where the intended thermoplastic resins are color resins, then a color pigment of which the color differs from the color of the intended thermoplastic resins may be preferably added to the other thermoplastic resin 20B or no pigment may be preferably added thereto so that the resin 20B could be a transparent resin.

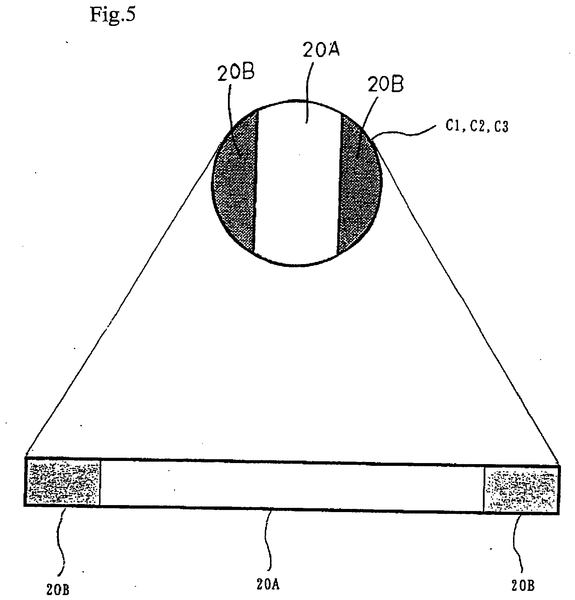

For minimizing the lapping part 6 of any of the intended thermoplastic resins 20A and the other thermoplastic resin 20B, in the invention, the difference in the melt viscosity between any of the intended thermoplastic resins 20A and the other thermoplastic resin 20B that pass through the feed block and the T-die may be at most 300 Pa·s (3000 poises) at a shear rate of from 20 to 500 sec⁻¹, whereby the thermoplastic resin 20B may coexist on both sides of any of the intended thermoplastic resins 20A, having a cross-sectional profile as in the upper view of Fig. 5; and in this condition, when the resin melts are widened through the manifold, then gives substantially no lapping part as in the lower view of Fig. 5, in which the other thermoplastic resin 20B coexists on both sides of the thermoplastic resin 20A. In this condition, therefore, a multilayered film can be formed, having a cross-sectional profile in which all the three resin layers of the intended thermoplastic resins 20A coexist with the other thermoplastic resin B adjacent thereto having substantially no lapping part therebetween. For controlling the melt viscosity difference to fall within the above-mentioned range, heaters and temperature sensors may be provided around the ducts C1, C2 and C3 for melt resin supply, the ducts D1, D2 andD3 for resinmelt supply, the feedblock 1, and the manifolds M1, M2 and M3 of the T-die 2, whereby the heating temperature is controlled by the use of a temperature controller in such a manner that the resin having a higher melt viscosity may be heated at a higher temperature while the resin having a lower melt viscosity may be heated at a lower temperature, and the melt viscosity difference between any of the thermoplastic resins 20A and the other thermoplastic resin 20B may be thereby controlled to be at most 300 Pa·s (3000 poises) at a shear rate of from 20 to 500 sec⁻¹.

In case where the melt viscosity difference between any of the intended thermoplastic resins 20A and the other thermoplastic resin 20B is controlled to be at most 300 Pa·s (3000 poises) at a shear rate of from 20 to 500 sec⁻¹, and in case where the melt viscosity of any of the intended thermoplastic resins 20A is larger than the melt viscosity of the other thermoplastic resin 20B and where any of the intended thermoplastic resins 20A alone ejected out through the die lip 4 of the T-die 2 may pulsate whereby the formed film width may periodically greatly fluctuate, then the other thermoplastic resin 20B having a larger melt viscosity than any of the intended thermoplastic resins 20A may be made to coexist on both sides of the thermoplastic resin 20A whereby the pulsation of any of the intended thermoplastic resins 20A may be inhibited and the fluctuation of the film width may be reduced. Accordingly, the intended unstretched film may be formed at a higher speed than other resin films of any of the intended thermoplastic resins 20A alone or of a plurality of the intended thermoplastic resins.

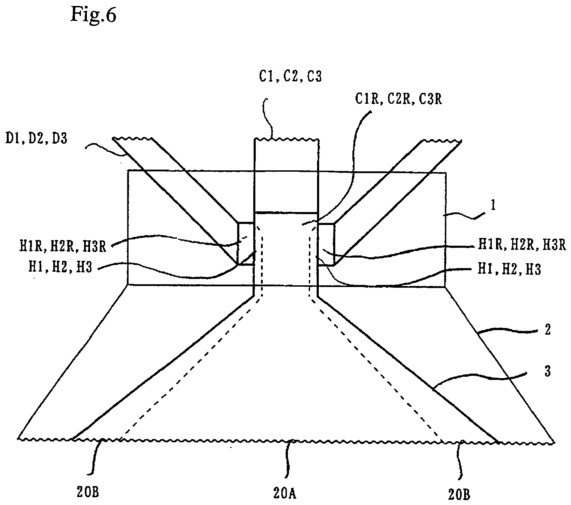

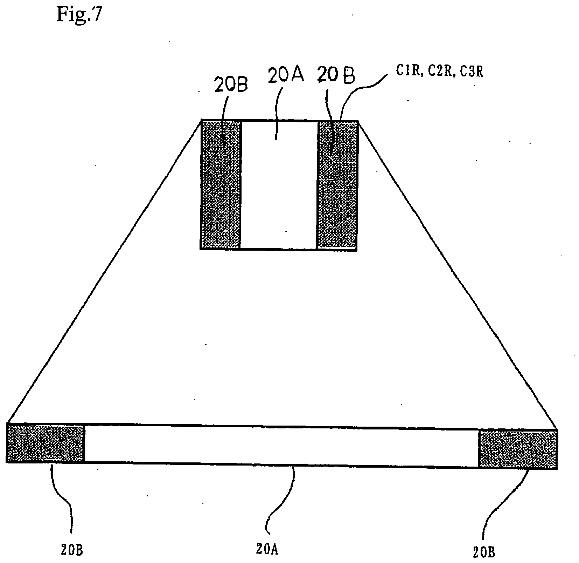

As in Fig. 6, in case where the parts C1R, C2R and C3R from just above any of the holes H1, H2 and H3, at which any of the ducts D1, D2 and D3 for resin melt supply for the thermoplastic resin 20B meets any of the ducts C1, C2 and C3 for resin melt supply for any of the intended thermoplastic resins 20A at both sides thereof in the feed block 1, to the connection part to the T-die at the lowermost part of any of the ducts C1, C2 and C3, and the parts H1R, H2R and H3R just before any of the holes H1, H2 and H3 of any of the ducts D1, D2 and D3 are designed to have a rectangular cross section, then the shape of the other thermoplastic resin 20B that is to coexist on both sides of any of the intended thermoplastic resins 20A before widened through the manifold in the T-die may be readily controlled to have the cross-sectional profile (any of C1R, C2R and C3R)) shown in the upper view of Fig. 7. Accordingly, when the resin melts are widened in that condition through any of the manifolds M1, M2 and M3, then they may give substantially no lapping part, as in the lower view of Fig. 7.

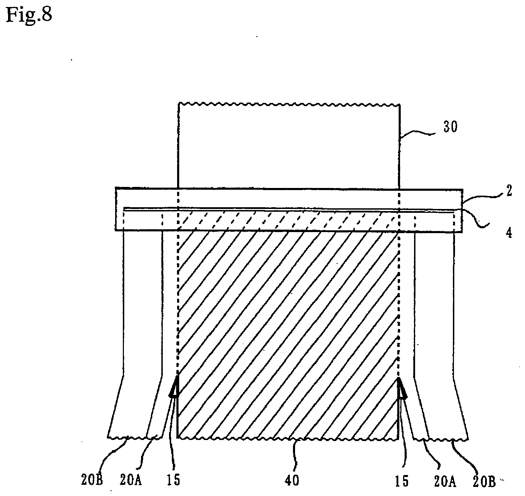

Next described is the process for producing a resin-coated metal sheet of the invention. Fig. 8 is a schematic plan view showing the top of a metal sheet 30 to be coated with resin, in which the metal sheet 30 runs continuously in the downward direction from the above on the figure, and any of the intended thermoplastic resins 20A for the intended multilayer film and another thermoplastic resin 20B are extruded out through the die lip 4 of a T-die 1, onto the metal sheet 30 to coat it by lamination in such a manner that the other resin 20B is to coexist on both sides of the resin 20A, and then the resin layers are laminated so that the metal sheet 30 is coated with the resulting multilayered resin film. The T-die 1 is so designed that the ejection width of the die lip 4 thereof is larger than the width of the metal sheet 30. Before a multilayered resin film of the intended plural thermoplastic resins 20A and another thermoplastic resin 20B is ejected through the die lip 4 of the T-die 1, the resins are processed in the same manner as in the process for producing an unstretched film of the invention mentioned above, and are formed into a molten film. Then, the resins are ejected out onto the metal sheet 30 to coat it by lamination in such a manner that the other thermoplastic resin 20B is to coexist on both sides of the intended thermoplastic resins 20A to form a film inevitably thicker than the laminated film of the thermoplastic resins 20A and that the width of the part of the multilayered resin layer of the intended thermoplastic resins 20A is larger than the width of the metal sheet 30. The hatched part in the drawing indicates the part of the metal sheet 30 coated with the multilayered resin layer of the intended plural thermoplastic resins 20A by lamination. In that manner, a resin-coated metal sheet 40 is obtained, in which the metal sheet 30 is coated with only a part of the intended plural thermoplastic resins 20Aby lamination, and then the other thermoplastic resin 20B and the part of the intended thermoplastic resins 20A protruding out from both edges of the metal sheet 30 are cut off, using a cutting tool 15 such as a cutter. In that manner, the entire width of the metal sheet 30 is coated by lamination with only the intended multilayered film of the intended thermoplastic resins 20A having a uniform thickness. The extrusion amount of the thermoplastic resins 20Amaybe controlled so that the part of the thermoplastic resins 20A to protrude out from both edges of the metal sheet 30 could be minimized, whereby the resin-coated metal sheet can be produced with substantially no loss of the intended thermoplastic resins 20A.

### EXAMPLES

The invention is described in more detail with reference to the following Examples.

### (Example 1)

As one of thermoplastic resins to be formed into a three-layered unstretched film, a polyester resin I (ethylene terephthalate/ethylene isophthalate copolymer (ethylene isophthalate, 5 mol%) ; melting point, 243°C; melt viscosity at a temperature of 260°C and at a shear rate of 100 sec⁻¹, 750 Pa·s (7500 poises)) was heated and melted at 260°C, using an extruder A1; as another of the thermoplastic resins, a polyester resin II (ethylene terephthalate/ethylene isophthalate copolymer (ethylene isophthalate, 10 mol%); melting point, 233°C; melt viscosity at a temperature of 260°C and at a shear rate of 100 sec⁻¹, 700 Pa·s (7000 poises)) was heated and melted at 260°C, using an extruder A2; and as still another of the thermoplastic resins, a polyester resin III (ethylene terephthalate/ethylene isophthalate copolymer (ethylene isophthalate, 15 mol%); melting point, 220°C; melt viscosity at a temperature of 260°C and at a shear rate of 100 sec⁻¹, 650 Pa·s (6500 poises)) was heated and melted at 260°C, using an extruder A3. As a thermoplastic resin to coexist on both sides of each of these intended thermoplastic resins, the polyester resin I, the polyester resin II and the polyester resin III, a resin (melt viscosity at a temperature of 200°C and at a shear rate of 100 sec⁻¹, 350 Pa·s (3500 poises)) prepared by adding 15 % by weight of a color component TiO₂ to polyethylene (melting point, 145°C) was heated and melted at 200°C, using an extruder B. Next, the heated and melted polyester resins I, II and III were fed from the respective extruders A1, A2 and A3 to a feed block 1, via resin melt supply ducts C1, C2 and C3 heated at 260°C by neighboring heaters; and the heated and melted polyethylene was fed from the extruder B thereto, via resin melt supply ducts D1, D2 and D3 each heated at 200°C by neighboring heaters. The resin melt supply ducts C1, C2 and C3 run through the feed block 1. Via the holes H1, H2 and H3 formed on both sides of the lower part of the ducts to communicate with the resin melt supply ducts D1, D2 and D3, the polyethylene was extruded out into the resin melt supply ducts C1, C2 and C3 whereby the polyethylene was made to coexist on both sides of each of the polyester resin I, the polyester resin II and the polyester resin III. Next, the resin melts were widened through the manifolds M1, M2 and M3 provided inside the T-die 2 in such a manner that the width of the part of each of the polyester resin I, the polyester resin II and the polyester resin III after film formation could be about 85 cm and the width of the part of the polyethylene on both sides of these resins could be about 7.5 cm, and thereafter combined at the meeting place 7 and laminated, dropped via the die lip 4 onto a continuously-rotating casting roll (chill roll) 5 and cooled and solidified thereon to give a three-layered resin film having a width of about 1 m. Just before the feed block 2, the resin temperature and the resin melt viscosity at a shear rate of 100 sec⁻¹ were as follows: Polyester resin I: 260°C, about 650 Pa·s (6500 poises). Polyester resin II: 260°C, about 600 Pa·s (6000 poises). Polyester resin III: 260°C, about 550 Pa·s (5500 poises). Polyethylene (with TiO₂ added) : 200°C, about 450 Pa·s (4500 poises). Thus formed, the three layered film had substantially no lapping part 6 of any of the polyester resin I, the polyester resin II or the polyester resin III and the polyethylene. Accordingly, at the position of 40 cm on both sides from the center of the three-layered resin film, the film was trimmed on both sides thereof with a cutter to give a three-layered unstretched resin film of the polyester resin I, the polyester resin II and the polyester resin III having a width of 80 cm, and this was wound up around a coiler.

### (Example 2)

As one of thermoplastic resins to be formed into a three-layered unstretched film, a polyester resin (ethylene terephthalate/ethylene isophthalate copolymer (ethylene isophthalate, 5 mol%); melting point, 243°C; melt viscosity at a temperature of 260°C and at a shear rate of 100 sec⁻¹, 750 Pa·s (7500 poises) was heated and melted at 260°C, using an extruder A1; as another of the thermoplastic resins, a polybutylene terephthalate I (melting point, 230°C; melt viscosity at a temperature of 260°C and at a shear rate of 100 sec⁻¹, 650 Pa·s (6500 poises) was heated and melted at 260°C, using an extruder A2; and as still another of the thermoplastic resins, a polybutylene terephthalate I (melting point, 231°C; melt viscosity at a temperature of 260°C and at a shear rate of 100 sec⁻¹, 700 Pa·s (7000 poises) was heated and melted at 260°C, using an extruder A3. As a thermoplastic resin to coexist on both sides of each of these intended thermoplastic resins, the polyester resin, the polybutylene terephthalate I and the polybutylene terephthalate II, a resin (melt viscosity at a temperature of 200°C and at a shear rate of 100 sec⁻¹, 450 Pa·s (4500 poises)) prepared by adding 20 % by weight of a color component TiO₂ to polyethylene (melting point, 160°C) was heated and melted at 200°C, using an extruder B. Next, in the same manner as in Example 1 except that the width of the part of each of the polyester resin, the polybutylene terephthalate I and the polybutylene terephthalate II after film formation could be about 90 cm and the width of the part of the polyethylene on both sides of each of these resins could be about 5 cm; the polyester resin, the polybutylene terephthalate I, the polybutylene terephthalate II and the polyethylene were ejected out and dropped onto a chill roll 5 and cooled and solidified thereon to form a resin film having a width of about 1 m. Just before the feed block 2, the resin temperature and the resin melt viscosity at a shear rate of 100 sec⁻¹ were as follows: Polyester resin: 260°C, about 600 Pa·s (6000 poises). Polybutylene terephthalate I: 260°C, about 500 Pa·s (5000 poises). Polybutylene terephthalate II: 260°C, about 550 Pa·s (5500 poises). Polyethylene (with TiO₂ added) : 200°C, about 450 Pa·s (4500 poises). Thus formed, the three-layered film had substantially no lapping part 6 of any of the polyester resin, the polybutylene terephthalate I or the polybutylene terephthalate II and the polyethylene. Accordingly, at the position of 44 cm on both sides from the center of the three-layered resin film, the film was trimmed on both sides thereof with a cutter to give a three-layered unstretched resin film of the polyester resin, the polybutylene terephthalate I and the polybutylene terephthalate II having a width of 88 cm, and this was wound up around a coiler.

### (Comparative Example 1)

As one of thermoplastic resins to be formed into a three-layered unstretched film, a polyester resin I (ethylene terephthalate/ethylene isophthalate copolymer (ethylene isophthalate, 3 mol%); melting point, 250°C; melt viscosity at a temperature of 260°C and at a shear rate of 100 sec⁻¹, 800 Pa·s (8000 poises)) was heated and melted at 260°C, using an extruder A1; as another of the thermoplastic resins, a polyester resin II (ethylene terephthalate/ethylene isophthalate copolymer (ethylene isophthalate, 10 mol%); melting point, 233°C; melt viscosity at a temperature of 260°C and at a shear rate of 100 sec⁻¹, 700 Pa·s (7000 poises)) was heated and melted at 260°C, using an extruder A2; and as still another of the thermoplastic resins, a polyester resin III (ethylene terephthalate/ethylene isophthalate copolymer (ethylene isophthalate, 15 mol%); melting point, 220°C; melt viscosity at a temperature of 260°C and at a shear rate of 100 sec⁻¹, 650 Pa·s (6500 poises)) was heated and melted at 260°C, using an extruder A3. As a thermoplastic resin to coexist on both sides of each of these intended thermoplastic resins, the polyester resin I, the polyester resin II and the polyester resin III, a resin (melt viscosity at a temperature of 200°C and at a shear rate of 100 sec⁻¹, 400 Pa·s (4000 poises) prepared by adding 20 % by weight of a color component TiO₂ to polyethylene (melting point, 140°C) was heated and melted at 200°C, using an extruder B. Next, in the same manner as in Example 1 except that the width of the part of each of the polyester resin I, the polyester resin II and the polyester resin III after film formation could be about 80 cm and the width of the part of the polyethylene on both sides of each of these resins could be about 10cm; the polyester resin I, the polyester resin II, the polyester resin III and the polyethylene were ejected out and dropped onto a chill roll 5 and cooled and solidified thereon to form a resin film having a width of about 1 m. Just before the feed block 2, the resin temperature and the resin melt viscosity at a shear rate of 100 sec⁻¹ were as follows: Polyester resin I: 260°C, about 750 Pa·s (7500 poises). Polyester resin II: 260°C, about 600 Pa·s (6000 poises). Polyester resin III: 260°C, about 550 Pa·s (5500 poises). Polyethylene (with TiO₂ added) : 200°C, about 350 Pa·s (3500 poises). Thus formed, the layer composed of the polyester resin I and the polyethylene on both sides thereof in the three-layered film had a lapping part 6 where the polyethylene had stepped in the upper and lower edges of the polyester resin I, as in Fig. 4. Therefore, the resin on both sides of the three-layered resin film including the lapping part must be cut off, and at the position of 30 cm on both sides from the center of the three-layered resin film, the film was trimmed on both sides thereof. As a result, the width of the three-layered unstretched resin film composed of the polyester resin I, the polyester resin II and the polyester resin III, thus obtained herein, was only 60 cm.

### (Comparative Example 2)

As three thermoplastic resins to form a three-layered unstretched film, the same polyester resin, polybutylene terephthalate I and polybutylene terephthalate II as those used in Example 2 were separately heated and melted in the same manner as in Example 2. As a thermoplastic resin to coexist on both sides of each of these intended thermoplastic resins, the polyester resin, the polybutylene terephthalate I and the polybutylene terephthalate II; a resin (melt viscosity at a temperature of 265°C and at a shear rate of 100 sec⁻¹, 970 Pa·s (9700 poises)). prepared by adding 20 % by weight of a color component TiO₂ to polyethylene terephthalate (melting point, 255°C) was heated and melted at 265°C, using an extruder B. Next, in the same manner as in Example 1 except that the polyester resin, the polybutylene terephthalate I and the polybutylene terephthalate II were extruded out from the extruders A1, A2 and A3 via the resin melt supply ducts C1, C2 and c3 heated at 260°C with neighboring heaters and the polyethylene terephthalate was from the extruder B via the resin melt supply ducts D1, D2 and D3 heated at 260°C, all through the feed block 1 in such a manner that a resin film having the polyethylene terephthalate (with TiO₂ added) coexisting on both sides of each of the polyester resin, the polybutylene terephthalate I and the polybutylene terephthalate II after their extrusion through the T-die could be obtained, and that the width of the part of each of the polyester resin, the polybutylene terephthalate I and the polybutylene terephthalate II after the film formation could be about 80 cm and the width of the part of the polyethylene terephthalate (with TiO₂ added) on both sides of each of these resins could be about 10 cm; the polyester resin, the polybutylene terephthalate I, the polybutylene terephthalate II and the polyethylene terephthalate were ejected out and dropped onto a chill roll 5 and cooled and solidified thereon to form a three-layered resin film having a width of about 1 m. Just before the feed block 1, the resin temperature and the resin melt viscosity at a shear rate of 100 sec⁻¹ were as follows: Polyester resin: 260°C, about 600 Pa·s (6000 poises). Polybutylene terephthalate I: 260°C, about 500 Pa·s (5000 poises). Polybutylene terephthalate II: 260°C, about 550 Pa·s (5000 poises) polyethylene terephthalate (with TiO₂ added) : 260°C, about 950 Pa·s (9500 poises). Thus formed, the film had a lapping part 6 where any of the polyester resin, the polybutylene terephthalate I and the polybutylene terephthalate II had stepped in the upper and lower edges of the polyethylene terephthalate, as in Fig. 5. Therefore, the resin on both sides of the three-layered resin film including the lapping part must be cut off, and at the position of 35 cm on both sides from the center of the three-layered resin film, the film was trimmed on both sides thereof. As a result, the width of the three-layered unstretched resin film composed of the polyester resin, the polybutylene terephthalate I and the polybutylene terephthalate II, thus obtained herein, was only 70 cm.

### (Example 3)

In the same film-forming apparatus as that used for production of the unstretched film in Examples 1 and 2 and Comparative Examples 1 and 2, a metal sheet, or that is, a zinc-plated steel sheet having a thickness of 0.3 mm and a width of 75 cm was continuously introduced, as uncoiled from an uncoiler, in place of the chill roll 5 therein. In the same manner as in Example 1, the same polyester resin I, the polyester resin II, polyester resin and polyethylene as those in Example 1 were melted and heated, and ejected out onto the zinc-plated metal sheet to coat it by lamination, through the die lip 4 disposed below the T-die 2 in such a manner that the polyethylene could coexist on both sides of the polyester resin I, the polyester resin II and the polyester resin III. The three-layered resin film thus formed by ejection, in which the polyethylene coexisted on both sides of the three-layered resins of the polyester resin I, the polyester resin II and the polyester resin III, had an overall with of about 1 m in such a manner that the width of the part of the three-layered resins of the polyester resin I, the polyester resin II and the polyester resin III was about 80 cm and the width of the part of the polyethylene on both sides of the three-layered resins was about 10 cm. On both sides in the cross direction of the zinc-plated steel sheet, a part of the three-layered resins of the polyester resin I, the polyester resin II and the polyester resin III and all the polyethylene protruded out, and the protruding resin parts were cut off with a cutter. Thus produced, the three-layered-resin-coated, zinc-plated steel sheet in which the entire surface of the zinc-plated steel sheet was coated with the three-layered resins of the polyester resin I, the polyester resin II and the polyester resin III by lamination thereon was coiled around a coiler.

### INDUSTRIAL APPLICABILITY

The process for producing a multilayered unstretched film according to a multi-manifold method of the invention comprises separately heating and melting plural thermoplastic resins, widening the heated and melted thermoplastic resins through the respective manifolds, and then combining and extruding them, wherein plural thermoplastic resins that are to be formed into a multilayered unstretched film and another thermoplastic resin than the plural thermoplastic resins are separately heated and melted, the other thermoplastic resin is led to both sides of the plural thermoplastic resins just before the resins are widened in their respective manifolds, then they are fed to the respective manifolds so that the other thermoplastic resin can coexist on both sides of the plural thermoplastic resins, and widened and then combined, and thereafter they are ejected out through the die lip of a T-die onto a casting roll to thereby form a multilayered unstretched film where a multilayered film of the other thermoplastic resin coexists on both sides of the multilayered film of the plural thermoplastic resins, and then the multilayered film of the other thermoplastic resin is cut off. Accordingly, in the process, the intended thermoplastic resin part is not almost cut off; and the other thermoplastic resin part that has been cut off in the process can be recycled as the other thermoplastic resin in the next step of producing multilayered unstretched films. Accordingly, the thick film part to be discarded after film formation is minimized, and the production cost of the multilayered unstretched film of the intended plural thermoplastic resins can be reduced.

The process for producing a multilayered-resin-coated metal sheet of the invention comprises forming films according to a multi-manifold method that comprises heating and melting plural thermoplastic resins, separately widening the heated and melted thermoplastic resins through the respective manifolds, then combining and extruding them, and thereafter ejecting and extruding them through the die lip of a T-die onto a metal sheet to coat it by lamination to produce a multilayered-resin-coated metal sheet, wherein plural thermoplastic resins that are to coat a metal sheet by lamination thereon and another thermoplastic resin than the plural thermoplastic resins are separately heated and melted, the other thermoplastic resin is led to both sides of the plural thermoplastic resins just before the resins are widened in their respective manifolds, then they are ejected out onto a metal sheet so that the other thermoplastic resin can coexist on both sides of the plural thermoplastic resins and that the width of the part of the multilayered thermoplastic resins is larger than the width of the metal sheet to give a res in-coated metal sheet where only the part of the multi-layered thermoplastic resins is laminated on the metal sheet to coat it, and thereafter the resin parts protruding from both sides of the metal sheet are cut off. Accordingly, in the process, the intended thermoplastic resin part is not almost cut off, and the entire surface of the metal sheet is coated with it; and the process gives a resin-coated metal sheet substantially with no loss of the intended thermoplastic resin. In addition, the other thermoplastic resin part that has been cut off in the process can be recycled as the other thermoplastic resin in the next step of producing multilayered unstretched films. Accordingly, the production cost of the multilayered-resin-coated metal sheet in which a metal sheet is coated and laminated with a multilayered resin film of the intended plural thermoplastic resins can be reduced.

The apparatus for producing a multilayered unstretched film of the invention is to produce such a multilayered (n-layered) unstretched film according to a multi-manifold method comprising separately heating and melting a plural number (n) of thermoplastic resins, then widening the heated and melted, plural thermoplastic resins through the respective manifolds and thereafter combining and extruding them to produce a multilayered (n-layered) unstretched film. The apparatus comprises a plural number (n) of extruders (A1 to A1) for separately heating and melting the plural thermoplastic resins to constitute the respective layers of the multilayered (n-layered) unstretched film, at least one extruder (B) for heating and melting another thermoplastic resin than the plural thermoplastic resins, a plural number (n) of ducts (C1 to Cn) for resin melt supply each connected to the respective extruders (A1 to An), a plural number (n) of ducts (D1 to Dn) for resin melt supply each connected to the extruder (B), a plural number (n) of feed blocks where two holes are formed on both sides of the lower part of the ducts (C1 to Cn) for resin melt supply and are connected to the ducts (D1 to Dn) for resin melt supply, a plural number (n) of manifolds, one die lip connected to each manifold, and one T-die connected to each feed block. In case where intended multilayered unstretched films are formed by the use of the apparatus for multilayered uns tretched film production of the invention, then an unstretched film having another thermoplastic resin coexisting on both sides of intended multilayered thermoplastic resins may be formed, and thereafter the other multilayered thermoplastic resin part that is formed to be inevitably thicker than the intended multilayered thermoplastic resin part may be cut off. Accordingly, in the apparatus, the intended thermoplastic resin part is not almost cut off; and the other thermoplastic resin part that has been cut off can be recycled as the other thermoplastic resin in the next step of producing multilayered unstretched films. Accordingly, the thick film part to be discarded after film formation is minimized, and the production cost of the multilayered unstretched film of the intended plural thermoplastic resins can be reduced.

## Claims

1. An apparatus for producing a multilayered (n-layered) unstretched film according to a multi-manifold method that comprises separately heating and melting a plural number n of thermoplastic resins, then widening the heated and melted plural thermoplastic resins through respective manifolds and thereafter combining and extruding them to produce a multilayered (n-layered) unstretched film; the apparatus comprising a plural number n of extruders (A1 to An) for separately heating and melting the plural thermoplastic resins to constitute the respective layers of the multilayered (n-layered) unstretched film, at least one extruder (B) for heating and melting another thermoplastic resin than the plural thermoplastic resins, a plural number n of ducts (C1 to Cn) for resin melt supply each connected to the respective extruders (A1 to An), a plural number n of ducts (D1 to Dn) for resin melt supply each connected to the extruder (B), a plural number n of feed blocks where two holes (H1, H2, H3) are formed on both sides of the lower part of the ducts (C1 to Cn) for resin melt supply and are connected to the ducts (D1 to Dn) for resin melt supply, a plural number n of manifolds, one die lip connected to each manifold, and one T-die connected to each feed block.

2. The apparatus for producing a multilayered unstretched film as claimed in claim 1, wherein, in each of the plural feed blocks, the cross section of the lower part of each duct to which the plural thermoplastic resins are fed is rectangular, and the cross section of the holes formed on both sides of the lower part of the duct is rectangular.

3. A process for producing a multilayered unstretched film according to a multi-manifold method by an apparatus according to claim 1 or 2, the process comprising separately heating and melting the plural thermoplastic resins, widening the heated and melted thermoplastic resins through the respective manifolds, and then combining and extruding them; wherein the plural thermoplastic resins that are to be formed into the multilayered unstretched film and the other thermoplastic resin than the plural thermoplastic resins are separately heated and melted, the other thermoplastic resin is led to both sides of the plural thermoplastic resins just before the resins are widened in their respective manifolds, then they are fed to the respective manifolds so that the other thermoplastic resin can coexist on both sides of the plural thermoplastic resins, and widened and then combined, and thereafter they are ejected out through the die lip of a T-die onto a casting roll to thereby form a multilayered unstretched film where a multilayered film of the other thermoplastic resin coexists on both sides of the multilayered film of the plural thermoplastic resins, and then the multilayered film of the other thermoplastic resin is cut off.

4. The process for producing a multilayered unstretched film as claimed in claim 3, wherein the plural thermoplastic resins and the other thermoplastic resin are heated and melted separately in different extruders, and fed to the resin melt supply ducts connected to the respective extruders for heating the plural thermoplastic resins, the heated and melted plural thermoplastic resins and the heated and melted other thermoplastic resin are fed separately to plural feed blocks where holes are formed on both sides of the lower part of the respective ducts for the plural thermoplastic resins and the end of the duct for the other thermoplastic resin is connected with each hole formed on both sides of each duct, and thereafter these are widened through plural manifolds separately connected to the respective feed blocks and extruded out through the die lip of the extrusion T-dye onto a casting roll in such a condition that the other thermoplastic resin coexists on both sides of the multilayered thermoplastic resins.

5. The process for producing a multilayered unstretched film as claimed in claim 3 or 4, wherein, in each feed block, the cross section of the lower part of each duct for supply of the plural thermoplastic resins is rectangular, and the cross section of the holes formed on both sides of the lower part of each duct is rectangular.

6. The process for producing a multilayered unstretched film as claimed in any of claims 3 to 5, wherein the plural thermoplastic resins and the other thermoplastic resin are ejected out through the die lip of the T-die to form the multilayered unstretched film in such a manner that the other thermoplastic resin may form only a part inevitably thicker than the part of the multilayered plural thermoplastic resins.

7. The process for producing a multilayered unstretched film as claimed in any of claims 3 to 6, wherein the difference in the melt viscosity between the plural thermoplastic resins and the other thermoplastic resin is at most 300 Pa·sec at a shear rate of from 20 to 500 sec⁻¹.

8. The process for producing a multilayered unstretched film as claimed in any of claims 3 to 7, wherein the other thermoplastic resin is a colored thermoplastic resin.

9. A process for producing a multilayered-resin-coated metal sheet comprising forming films according to a multi-manifold method by an apparatus according to claim 1 or 2, the process comprising heating and melting the plural thermoplastic resins, separately widening the heated and melted thermoplastic resins through the respective manifolds, then combining and extruding them, and thereafter ejecting and extruding them through the die lip of a T-die onto a metal sheet to coat it by lamination to produce the multilayered-resin-coated metal sheet; wherein the plural thermoplastic resins that are to coat a metal sheet by lamination thereon and the other thermoplastic resin than the plural thermoplastic resins are separately heated and melted, the other thermoplastic resin is led to both sides of the plural thermoplastic resins just before the resins are widened in their respective manifolds, then they are ejected out onto the metal sheet so that the other thermoplastic resin can coexist on both sides of the plural thermoplastic resins and that the width of the part of the multilayered thermoplastic resins is larger than the width of the metal sheet to give a resin-coated metal sheet where only the part of the multi-layered thermoplastic resins is laminated on the metal sheet to coat it, and thereafter the resin parts protruding from both sides of the metal sheet are cut off.

10. The process for producing a multilayered-resin-coated metal sheet as claimed in claim 9, wherein the plural thermoplastic resins and the other thermoplastic resin are ejected out through the die lip of the T-die onto the metal sheet in such a manner that the other thermoplastic resin may form only a part inevitably thicker than the part of the multilayered thermoplastic resins.

11. The process for producing a multilayered-resin-coated metal sheet as claimed in claim 9 or 10, wherein the difference in the melt viscosity between the plural thermoplastic resins and the other thermoplastic resin is at most 300 Pa·s at a shear rate of from 20 to 500 sec⁻¹.

12. The process for producing a multilayered-resin-coated metal sheet as claimed in any of claims 9 to 11, wherein the other thermoplastic resin is a colored thermoplastic resin.

## Patentansprüche

1. Vorrichtung zur Herstellung einer mehrschichtigen (n-schichtigen) ungestreckten Folie gemäß einem Mehrfachverteilerverfahren, das aufweist: getrenntes Erwärmen und Schmelzen einer Mehrzahl n thermoplastischer Harze, anschließendes Verbreitern der erwärmten und geschmolzenen mehreren thermoplastischen Harze über jeweilige Verteiler und danach erfolgendes Kombinieren und Extrudieren derselben, um eine mehrschichtige (n-schichtige) ungestreckte Folie herzustellen; wobei die Vorrichtung aufweist: eine Mehrzahl n von Extrudern (A1 bis An) zum getrennten Erwärmen und Schmelzen der mehreren thermoplastischen Harze, um die jeweiligen Schichten der mehrschichtigen (n-schichtigen) ungestreckten Folie zu bilden, mindestens einen Extruder (B) zum Erwärmen und Schmelzen eines anderen thermoplastischen Harzes als die mehreren thermoplastischen Harze, eine Mehrzahl n von Kanälen (C1 bis Cn) zur Harzschmelzenzufuhr, die jeweils mit den jeweiligen Extrudern (A1 bis An) verbunden sind, eine Mehrzahl n von Kanälen (D1 bis Dn) zur Harzschmelzenzufuhr, die jeweils mit dem Extruder (B) verbunden sind, eine Mehrzahl n von Förderblöcken, in denen zwei Löcher (H1, H2, H3) auf beiden Seiten des Unterteils der Kanäle (C1 bis Cn) zur Harzschmelzenzufuhr gebildet sind und mit den Kanälen (D1 bis Dn) zur Harzschmelzenzufuhr verbunden sind, eine Mehrzahl n von Verteilern, ein Werkzeugspalt, der mit jedem Verteiler verbunden ist, und ein T-Werkzeug, das mit jedem Förderblock verbunden ist.

2. Vorrichtung zur Herstellung einer mehrschichtigen ungestreckten Folie nach Anspruch 1, wobei in jedem der mehreren Förderblöcke der Querschnitt des Unterteils jedes Kanals, in den die mehreren thermoplastischen Harze gefördert werden, rechteckig ist und der Querschnitt der Löcher, die auf beiden Seiten des Unterteils des Kanals gebildet sind, rechteckig ist.

3. Verfahren zur Herstellung einer mehrschichtigen ungestreckten Folie gemäß einem Mehrfachverteilerverfahren durch eine Vorrichtung nach Anspruch 1 oder 2, wobei das Verfahren aufweist: getrenntes Erwärmen und Schmelzen der mehreren thermoplastischen Harze, Verbreitern der erwärmten und geschmolzenen thermoplastischen Harze über die jeweiligen Verteiler und anschließendes Kombinieren und Extrudieren derselben; wobei die mehreren thermoplastischen Harze, die zur mehrschichtigen ungestreckten Folie auszubilden sind, und das andere thermoplastische Harz als die mehreren thermoplastischen Harze getrennt erwärmt und geschmolzen werden, das andere thermoplastische Harz zu beiden Seiten der mehreren thermoplastischen Harze kurz vor Verbreitern der Harze in ihren jeweiligen Verteilern geführt wird, sie dann in die jeweiligen Verteiler so gefördert werden, dass das andere thermoplastische Harz auf beiden Seiten der mehreren thermoplastischen Harze koexistieren, und verbreitert und dann kombiniert werden kann, und sie danach über den Werkzeugspalt eines T-Werkzeugs auf eine Gießwalze ausgestoßen werden, um dadurch eine mehrschichtige ungestreckte Folie zu bilden, in der eine mehrschichtige Folie aus dem anderen thermoplastischen Harz auf beiden Seiten der mehrschichtigen Folie aus den mehreren thermoplastischen Harzen koexistiert, und dann die mehrschichtige Folie aus dem anderen thermoplastischen Harz abgeschnitten wird.

4. Verfahren zur Herstellung einer mehrschichtigen ungestreckten Folie nach Anspruch 3, wobei die mehreren thermoplastischen Harze und das andere thermoplastische Harz in unterschiedlichen Extrudern getrennt erwärmt und geschmolzen werden und in die Harzschmelzenzufuhrkanäle gefördert werden, die mit den jeweiligen Extrudern zum Erwärmen der mehreren thermoplastischen Harze verbunden sind, die erwärmten und geschmolzenen mehreren thermoplastischen Harze und das erwärmte und geschmolzene andere thermoplastische Harz in mehrere Förderblöcke getrennt aufgegeben werden, in denen Löcher auf beiden Seiten des Unterteils der jeweiligen Kanäle für die mehreren thermoplastischen Harze gebildet sind, und das Ende des Kanals für das andere thermoplastische Harz mit jedem Loch verbunden ist, das auf beiden Seiten jedes Kanals gebildet ist, und danach diese über mehrere Verteiler verbreitert werden, die mit den jeweiligen Förderblöcken getrennt verbunden sind, und über den Werkzeugspalt des T-Extrusionswerkzeugs auf eine Gießwalze in einem solchen Zustand extrudiert werden, dass das andere thermoplastische Harz auf beiden Seiten der mehrschichtigen thermoplastischen Harze koexistiert.

5. Verfahren zur Herstellung einer mehrschichtigen ungestreckten Folie nach Anspruch 3 oder 4, wobei in jedem Förderblock der Querschnitt des Unterteils jedes Kanals zur Zufuhr der mehreren thermoplastischen Harze rechteckig ist und der Querschnitt der Löcher, die auf beiden Seiten des Unterteils jedes Kanals gebildet sind, rechteckig ist.

6. Verfahren zur Herstellung einer mehrschichtigen ungestreckten Folie nach einem der Ansprüche 3 bis 5, wobei die mehreren thermoplastischen Harze und das andere thermoplastische Harz über den Werkzeugspalt des T-Werkzeugs ausgestoßen werden, um die mehrschichtige ungestreckte Folie so zu bilden, dass das andere thermoplastische Harz nur einen Teil bilden kann, der zwangsläufig dicker als der Teil aus den mehrschichtigen mehreren thermoplastischen Harzen ist.

7. Verfahren zur Herstellung einer mehrschichtigen ungestreckten Folie nach einem der Ansprüche 3 bis 6, wobei die Differenz der Schmelzviskosität zwischen den mehreren thermoplastischen Harzen und dem anderen thermoplastischen Harz höchstens 300 Pa·s bei einer Scherrate von 20 bis 500 s⁻¹ beträgt.

8. Verfahren zur Herstellung einer mehrschichtigen ungestreckten Folie nach einem der Ansprüche 3 bis 7, wobei das andere thermoplastische Harz ein farbiges thermoplastisches Harz ist.

9. Verfahren zur Herstellung eines mit mehrschichtigem Harz beschichteten Blechs, das aufweist: Bilden von Filmen gemäß einem Mehrfachverteilerverfahren durch eine Vorrichtung nach Anspruch 1 oder 2, wobei das Verfahren aufweist: Erwärmen und Schmelzen der mehreren thermoplastischen Harze, getrenntes Verbreitern der erwärmten und geschmolzenen thermoplastischen Harze über die jeweiligen Verteiler, anschließendes Kombinieren und Extrudieren derselben und danach erfolgendes Ausstoßen und Extrudieren derselben über den Werkzeugspalt eines T-Werkzeugs auf ein Blech, um es durch Lamination zu beschichten und das mit mehrschichtigem Harz beschichtete Blech herzustellen; wobei die mehreren thermoplastischen Harze, die ein Blech durch Lamination darauf beschichten sollen, und das andere thermoplastische Harz als die mehreren thermoplastischen Harze getrennt erwärmt und geschmolzen werden, das andere thermoplastische Harz zu beiden Seiten der mehreren thermoplastischen Harze kurz vor Verbreitern der Harze in ihren jeweiligen Verteilern geführt wird, sie dann auf das Blech so ausgestoßen werden, dass das andere thermoplastische Harz auf beiden Seiten der mehreren thermoplastischen Harze koexistieren kann und dass die Breite des Teils aus den mehrschichtigen thermoplastischen Harzen größer als die Breite des Blechs ist, um ein mit Harz beschichtetes Blech zu ergeben, bei dem nur der Teil aus den mehrschichtigen thermoplastischen Harzen auf das Blech laminiert ist, um es zu beschichten, und danach die von beiden Seiten des Blechs vorstehenden Harzteile abgeschnitten werden.

10. Verfahren zur Herstellung eines mit mehrschichtigem Harz beschichteten Blechs nach Anspruch 9, wobei die mehreren thermoplastischen Harze und das andere thermoplastische Harz über den Werkzeugspalt des T-Werkzeugs auf das Blech so ausgestoßen werden, dass das andere thermoplastische Harz nur einen Teil bilden kann, der zwangsläufig dicker als der Teil aus den mehrschichtigen thermoplastischen Harzen ist.

11. Verfahren zur Herstellung eines mit mehrschichtigem Harz beschichteten Blechs nach Anspruch 9 oder 10, wobei die Differenz der Schmelzviskosität zwischen den mehreren thermoplastischen Harzen und dem anderen thermoplastischen Harz höchstens 300 Pa·s bei einer Scherrate von 20 bis 500 s⁻¹ beträgt.

12. Verfahren zur Herstellung eines mit mehrschichtigem Harz beschichteten Blechs nach einem der Ansprüche 9 bis 11, wobei das andere thermoplastische Harz ein farbiges thermoplastisches Harz ist.

## Revendications

1. Appareil pour la production d'un film non-étiré multicouches (n-couches) selon un procédé multi-tubulures qui comprend le chauffage et la fusion séparés d'un nombre pluriel n de résines thermoplastiques, puis la dilatation des plusieurs résines thermoplastiques chauffées et fondues à travers des tubulures respectives et après cela la combinaison et l'extrusion de celles-ci pour produire un film non-étiré multicouches (n-couches) ; l'appareil comprenant un nombre pluriel d'extrudeuses (A1 à An) pour chauffer et faire fondre séparément les plusieurs résines thermoplastiques pour constituer les couches respectives du film non-étiré multicouches (n-couches), au moins une extrudeuse (B) pour chauffer et faire fondre une résine thermoplastique différente des plusieurs résines thermoplastiques, un nombre pluriel n de canalisations (C1 à Cn) pour une alimentation à l'état de fusion de résine chacune connectée aux extrudeuses respectives (A1 à An), un nombre pluriel n de canalisations (D1 à Dn) pour l'alimentation à l'état de fusion de résine chacune connectée à l'extrudeuse (B), un nombre pluriel n de blocs d'alimentation où deux trous (H1, H2, H3) sont formés sur les deux côtés de la partie inférieure des canalisations (C1 à Cn) pour une alimentation à l'état de fusion de résine et sont connectés aux canalisations (D1 à Dn) pour une alimentation à l'état de fusion de résine, un nombre pluriel n de tubulures, une lèvre de filière connectée à chaque tubulure, et une filière en T connectée à chaque bloc d'alimentation.

2. Appareil de production d'un film non-étiré multicouches selon la revendication 1, dans lequel, dans chacun des plusieurs blocs d'alimentation, la section transversale de la partie inférieure de chaque canalisation dans laquelle les plusieurs résines thermoplastiques sont introduites est rectangulaire, et la section transversale des trous formés sur les deux côtés de la partie inférieure de la canalisation est rectangulaire.

3. Procédé de production d'un film non-étiré multicouches selon un procédé multi-tubulures par un appareil selon la revendication 1 ou 2, le procédé comprenant le chauffage et la fusion séparés des plusieurs résines thermoplastiques, la dilatation des résines thermoplastiques chauffées et fondues par les tubulures respectives, et puis la combinaison et l'extrusion de celles-ci ; dans lequel les plusieurs résines thermoplastiques qui doivent être façonnées en le film non-étiré multicouches et la résine thermoplastique différente des plusieurs résines thermoplastiques sont séparément chauffées et fondues, la résine thermoplastique différente est amenée vers les deux côtés des plusieurs résines thermoplastiques juste avant que les résines soient dilatées dans leurs tubulures respectives, puis sont introduites dans les tubulures respectives, de sorte que la résine thermoplastique différente peut coexister sur les deux côtés des plusieurs résines thermoplastiques, et dilatées et ensuite combinées, et elles sont après cela éjectées à l'extérieur à travers la lèvre de filière d'une filière en T sur un cylindre de coulée pour former par là un film non-étiré multicouches où un film multicouches de la résine thermoplastique différente coexiste sur les deux côtés du film multicouches des plusieurs résines thermoplastiques, et puis le film multicouches de la résine thermoplastique différente est découpé.

4. Procédé de production d'un film non-étiré multicouches selon la revendication 3, dans lequel les plusieurs résines thermoplastiques et la résine thermoplastique différente sont chauffées et fondues séparément dans des extrudeuses différentes, et introduites dans les canalisations d'alimentation à l'état de fusion de résine connectées aux extrudeuses respectives pour chauffer les plusieurs résines thermoplastiques, les plusieurs résines thermoplastiques chauffées et fondues et la résine thermoplastique différente chauffée et fondue sont introduites séparément dans plusieurs blocs d'alimentation où des trous sont formés sur les deux côtés de la partie inférieure des canalisations respectives pour les plusieurs résines thermoplastiques et l'extrémité de la canalisation pour la résine thermoplastique différente est connectée à chaque trou formé sur les deux côtés de chaque canalisation, et celles-ci sont après cela dilatées à travers plusieurs tubulures séparément connectées aux blocs d'alimentation respectifs et extrudées à l'extérieur de la lèvre de filière de la filière en T d'extrusion sur un cylindre de coulée de sorte que la résine thermoplastique différente coexiste sur les deux côtés des résines thermoplastiques multicouches.

5. Procédé de production d'un film non-étiré multicouches selon la revendication 3 ou 4, dans lequel, dans chaque bloc d'alimentation, la section transversale de la partie inférieure de chaque canalisation pour l'alimentation des plusieurs résines thermoplastiques est rectangulaire, et la section transversale des trous formés sur les deux côtés de la partie inférieure de chaque canalisation est rectangulaire.

6. Procédé de production d'un film non-étiré multicouches selon l'une quelconque des revendications 3 à 5, dans lequel les plusieurs résines thermoplastiques et la résine thermoplastique différente sont éjectées à l'extérieur à travers la lèvre de filière de la filière en T pour former le film non-étiré multicouches de sorte que la résine thermoplastique différente peut former seulement une partie inévitablement plus épaisse que la partie des plusieurs résines thermoplastiques multicouches.

7. Procédé de production d'un film non-étiré multicouches selon l'une quelconque des revendications 3 à 6, dans lequel la différence de la viscosité à l'état de fusion entre les plusieurs résines thermoplastiques et la résine thermoplastique différente est d'au plus 300 Pa·sec à une vitesse de cisaillement de 20 à 500 sec⁻¹.

8. Procédé de production d'un film non-étiré multicouches selon l'une quelconque des revendications 3 à 7, dans lequel la résine thermoplastique différente est une résine thermoplastique colorée.

9. Procédé de production d'une tôle de métal revêtue de résine multicouches comprenant la formation de films selon un procédé multi-tubulures par un appareil selon la revendication 1 ou 2, le procédé comprenant le chauffage et la fusion des plusieurs résines thermoplastiques, la dilatation séparée des plusieurs résines thermoplastiques chauffées et fondues à travers les tubulures respectives, puis la combinaison et l'extrusion de celles-ci, et après cela l'éjection et l'extrusion de celles-ci à travers la lèvre de filière d'une filière en T sur une tôle de métal pour la revêtir par stratification pour produire la tôle de métal revêtue de résine multicouches ; dans lequel les plusieurs résines thermoplastiques sont destinées à revêtir une tôle de métal par stratification sur son dessus et la résine thermoplastique différente des plusieurs résines thermoplastiques est séparément chauffée et fondue, la résine thermoplastique différente est amenée sur les côtés des plusieurs résines thermoplastiques juste avant que les résines soient dilatées dans leurs tubulures respectives, puis sont éjectées à l'extérieur sur la tôle de métal de sorte que la résine thermoplastique différente peut coexister sur les deux côtés des plusieurs résines thermoplastiques et que la largeur de la partie des résines thermoplastiques multicouches est plus large que la largeur de la tôle de métal pour fournir une tôle de métal revêtue de résine où seulement la partie des résines thermoplastiques multicouches est stratifiée sur la tôle de métal pour la revêtir, et après cela les parties de résine faisant saillie à partir des deux côtés de la tôle de métal sont découpées.

10. Procédé de production d'une tôle de métal revêtue de résine multicouches selon la revendication 9, dans lequel les plusieurs résines thermoplastiques et la résine thermoplastique différente sont éjectées à l'extérieur à travers la lèvre de filière de la filière en T sur la tôle de métal de telle manière que la résine thermoplastique différente peut former seulement une partie inévitablement plus épaisse que la partie des résines thermoplastiques multicouches.

11. Procédé de production d'une tôle de métal revêtue de résine multicouches selon la revendication 9 ou 10, dans lequel la différence de la viscosité à l'état de fusion entre les plusieurs résines thermoplastiques et la résine thermoplastique différente est d'au plus 300 Pa·s à une vitesse de cisaillement de 20 à 500 sec⁻¹.

12. Procédé de production d'une tôle de métal revêtue de résine multicouches selon l'une quelconque des revendications 9 à 11, dans lequel la résine thermoplastique différente est une résine thermoplastique colorée.
